# FASCICULE DE BREVET EUROPEEN

(11) **EP 0 793 452 B1**
(45) Date de publication et mention de la délivrance du brevet: **27.01.1999**
(21) Numéro de dépôt: 95941124.0
(22) Date de dépôt: 22.11.1995
(51) Int. Cl.: A61C 8/00

(54) **IMPLANT DENTAIRE**
ZAHNIMPLANTAT
DENTAL IMPLANT

(30) Priorité: 22.11.1994 FR 9413969
(43) Date de publication de la demande: 10.09.1997
(73) Titulaire: Bordes, Sylvain, 33470 Gujan-Mestras (FR)
(72) Inventeur: Bordes, Sylvain, 33470 Gujan-Mestras (FR)
(74) Mandataire: Ahner, Francis
(86) Numéro de dépôt international: FR9501537
(87) Numéro de publication internationale: WO9615730

(56) Documents cités:
- EP-A- 0 320 024
- WO-A-93/19688
- DE-A- 4 127 436
- FR-A- 2 695 822

## Description

La présente invention concerne un implant dentaire.

Les implants dentaires de types connus, comprennent généralement un corps conformé pour être inséré dans l'os maxillaire alvéolaire. Le corps de l'implant porte un support de dent apte à recevoir une dent de prothèse, le corps et le support de dent constituant un ensemble rigide.

Un tel implant dentaire notamment décrit dans le document WO-87 06816 comporte un tube métallique apte à être impacté dans l'os maxillaire, à l'intérieur duquel est positionnée une pastille sur laquelle est monté en appui le support de dent. Au niveau de l'ouverture supérieure du tube métallique, une enveloppe en matière plastique entoure le support de dent de façon à le fixer au tube métallique. En outre, un bouchon assurant l'obturation de l'implant excerce une pression sur l'enveloppe en matière plastique entourant le support de l'implant. Cette enveloppe en matière plastique n'assure pas une réelle souplesse au niveau du support de dent.

De nombreuses études ont démontré que les dents présentent naturellement une certaine mobilité. Cette mobilité résulte de la configuration de l'os maxillaire alvéolaire et du ligament parodontal qui confèrent à la dent une raideur et un amortissement. Cette mobilité permet d'atténuer les efforts transmis aux maxillaires lors de la mastication.

On connaît du document WO93/19688 appartenant au demandeur, un implant dentaire selon le préambule de la revendication 1.

Selon ce document, l'implant dentaire est agencé de sorte que la bague parodontale (dénommée support de dent dans la revendication 1), l'élément de liaison et le corps forment un ensemble rigide.

Un élément support comporte une portée cylindrique pourvue d'un taraudage qui traverse la bague parodontale et l'élément de liaison pour se visser sur l'insert de montage qui est une vis. Ledit élément support vissé sur l'insert de montage présente une capacité de déplacement limité amorti dans ledit ensemble rigide.

Un tel implant présente un agencement relativement complexe.

La présente invention propose un nouveau type d'implant dentaire qui présente une configuration simple et qui permet de retrouver les caractéristiques de mobilité que présentent normalement une dent naturelle pour imiter les efforts transmis à l'os maxillaire.

Plus particulièrement, selon l'invention l'implant dentaire comporte, les caracteristiques de la revendication 1.

Ainsi selon l'invention, le support de dent et l'insert de montage assemblés sont montés de façon souple dans le corps de l'implant, c'est à dire qu'ils peuvent légèrement se déplacer en translation verticale dans ledit corps. De ce fait, lorsque la dent prothétique montée sur le support de dent est soumise à des efforts dus par exemple à la mastication, ces efforts sont transmis à l'élément élastiquement déformable par l'intermédiaire de l'insert qui le comprime élastiquement.

La description qui va suivre en regard des dessins annexés, donnés à titre d'exemples non limitatifs, fera bien comprendre en quoi consiste l'invention et comment elle peut être réalisée.
La figure 1 est une vue schématique en perspective éclatée d'un premier mode de réalisation de l'implant dentaire selon l'invention, avec un arrachement au niveau du corps de l'implant.
La figure 2 est une vue schématique en perspective de l'implant dentaire de la figure 1 à l'état monté avec un arrachement partiel.
La figure 3 est une vue schématique en perspective d'un second mode de réalisation de l'implant dentaire selon l'invention à l'état monté avec un arrachement partiel.

Préliminairement, on notera que d'un mode de réalisation à l'autre les éléments identiques ou similaires ont été désignés dans la mesure du possible par les mêmes signes de référence et ne seront pas décrits à chaque fois.

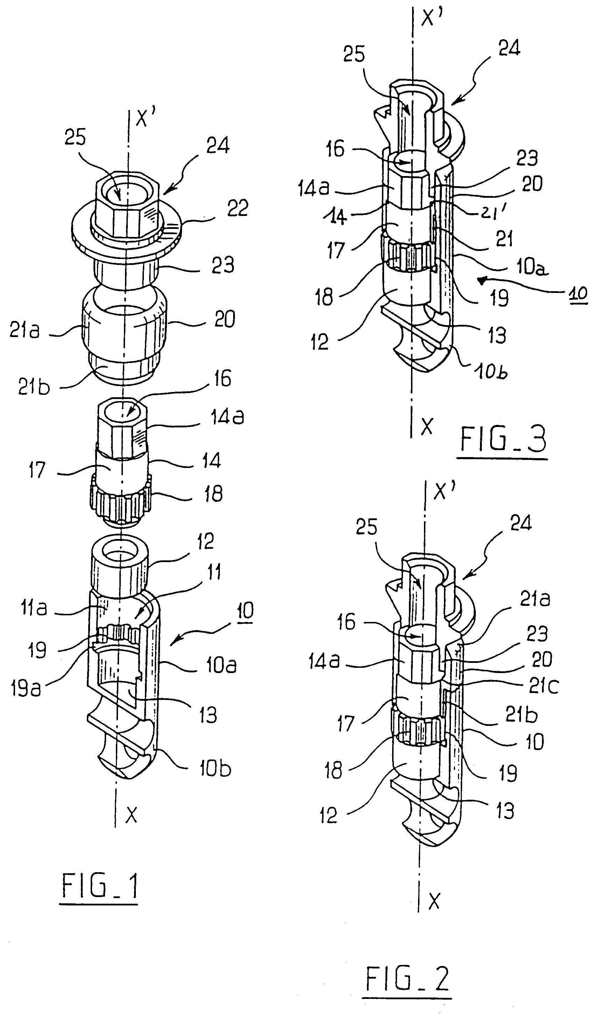

En référence aux figures 1 et 2, on a représenté un implant dentaire qui comporte un corps 10 allongé suivant un axe vertical X-X' correspondant à l'axe de montage de l'implant dans l'os maxillaire. Ce corps 10 destiné à être implanté dans l'os maxillaire, comporte une partie principale 10a essentiellement cylindrique de révolution autour de l'axe X-X'. La paroi externe périphérique de la partie principale 10a du corps 10 de l'implant est ici une paroi lisse, ce corps 10a étant destiné à être impacté dans l'os maxillaire. Bien entendu, selon d'autres variantes non représentées, on peut envisager que cette paroi externe soit pourvue d'un filetage en vue d'un vissage du corps dans l'os maxillaire, ou bien soit conformée en gradins et le cas échéant revêtu d'une matière favorisant l'ancrage et l'ostéo-intégration, par exemple un plasma de titane. La partie principale 10a du corps 10 est percée d'un alésage axial 11 ouvert à une extrémité, ici en partie supérieure, et comportant un fond 13. Cet alésage axial 11 présente une paroi 11a généralement cylindrique de révolution autour de l'axe X-X'.
Au moins, une zone de la paroi interne 11a est nécessairement conformée avec un profil particulier pour assurer la solidarisation avec d'autres pièces de l'implant dentaire, comme cela sera décrit ultérieurement. En dessous de la partie principale 10a, le corps 10 se prolonge par une partie secondaire 10b percée de canaux sensiblement transversaux à l'axe X-X', qui assurent l'irrigation sanguine. Ces canaux d'irrigation forment des cavités dans lesquelles s'effectue la repousse osseuse ce qui assure un blocage du corps dans l'os maxillaire.

Le corps de l'implant étant destiné à être en contact avec la gencive, il est réalisé en alliage à base de titane et de préférence en titane pur.

En outre, l'implant dentaire comporte un élément 12 élastiquement déformable positionné sur le fond 13 de l'alésage axial 11 du corps de l'implant 10. Cet élément 12 présente une forme de manchon cylindrique de révolution autour de l'axe X-X', et de hauteur déterminée de sorte qu'une fois positionné sur le fond de l'alésage 11, l'élément élastiquement déformable 12 remplit une partie seulement de la hauteur de l'alésage axial 11. A cet effet, on notera que le diamètre externe du manchon 12 élastiquement déformable est sensiblement égal au diamètre de l'alésage axial 11 du corps 10 de sorte que lorsque celui-ci est mis en place sur le fond 13 dudit alésage, la surface périphérique cylindrique de révolution du manchon 12 vient contre la paroi cylindrique de révolution de l'alésage axial 11.

Ce manchon 12 est avantageusement réalisé dans un matériau polymérique notamment à base de polyéthylène.

L'implant dentaire comporte également un insert de montage 14 qui affecte une forme allongée selon l'axe X-X'. Cet insert 14 est monté dans l'alésage axial 11 du corps 10 en appui contre la surface supérieure du manchon 12 élastiquement déformable. L'insert de montage 14 comporte sur une partie de sa hauteur une paroi externe périphérique 17 cylindrique de révolution autour de l'axe X-X' pourvue, dans le mode de réalisation représenté, de nervures 18. Ces nervures 18 s'étendent verticalement sur une partie de la hauteur de ladite paroi périphérique cylindrique de révolution 17 et sont réparties régulièrement sur son pourtour. Elles coopèrent avec des rainures de forme complémentaire 19 formées dans la paroi 11a de l'alésage axial 11, sur une partie seulement de sa hauteur en ménageant une partie lisse à proximité de l'ouverture dudit alésage. Cette coopération permet de bloquer en rotation l'insert de montage 14 dans l'alésage axial 11, tout en laissant ledit insert libre en translation suivant l'axe X-X'. On distingue sur la figure 1 qu'une gorge annulaire 19a est avantageusement réalisée dans la paroi 11a de l'alésage axial 11 du corps 10, juste en dessous desdites rainures 19. Cette gorge annulaire 19a facilite la formation des rainures 19 dans la paroi interne 11a de l'alésage axial 11.

On remarquera que le manchon élastiquement déformable 12 présente une hauteur telle que sa surface supérieure arrive au niveau de la gorge annulaire 19a, et l'insert de montage 14 comporte en dessous des nervures 18 une partie cylindrique qui lors de son montage dans l'alésage axial 11 s'introduit dans l'orifice central du manchon 12, la partie nervurée de l'insert 14 reposant alors sur la surface supérieure annulaire du manchon 12.

L'insert de montage 14 se prolonge au-dessus de sa partie cylindrique de révolution 17 pourvue des nervures 18 par une partie comportant une paroi externe périphérique polygonale 14a, ici à huit pans.

De plus, l'insert de montage 14 est percé d'un orifice axial 16, ici seulement ouvert à une extrémité de montage, l'extrémité supérieure. On peut envisager dans un autre mode de réalisation que l'insert de montage 14 soit percé d'un orifice traversant. Cet orifice 16 est dans le mode de réalisation décrit et représenté muni d'un taraudage.

La partie de l'insert 14 pourvue de la paroi externe polygonale 14a est positionnée à l'extérieur de l'alésage axial 11 du corps 10.

Cet insert 14 est une pièce de montage qui doit présenter des caractéristiques de résistance mécanique particulières et est réalisé de préférence en alliage à base de titane.

L'implant dentaire comprend un moyen de liaison, ici une bague de liaison 20 réalisée en alliage à base de titane ou de préférence en titane, qui, selon le mode de réalisation représenté sur les figures 1 et 2, présente une forme de deux manchons 21a, 21b superposés et décalés radialement. Le manchon supérieur 21a de plus grand diamètre de la bague de liaison 20, comporte un diamètre externe égal au diamètre externe du corps 10. Le manchon inférieur 21b de plus petit diamètre de la bague de liaison 20, comporte un diamètre externe sensiblement égal au diamètre interne de l'alésage axial 11 du corps 10 et un diamètre interne sensiblement supérieur aux dimensions externes de l'insert 14 de sorte qu'il est emmanché ou vissé à force dans ledit alésage axial 11 entre la paroi externe périphérique 17 de l'insert 14, au-dessus des nervures 18, et la paroi 11a de l'alésage axial 11. On notera ici que le manchon inférieur 21b de la bague de liaison 20 permet de limiter la translation selon l'axe X-X' de l'insert 14 dans l'alésage axial 11, vers l'extrémité ouverte de ce dernier, par coopération de butée avec les nervures 18 dudit insert 14. La partie supérieure de plus grand diamètre en forme de manchon 21a de la bague de liaison 20 est alors montée sur le corps 10 de sorte que sa surface périphérique externe assure la continuité de la surface externe périphérique cylindrique de révolution du corps 10 de l'implant. Cette partie supérieure 21a entoure la partie supérieure 14a de l'insert de montage 14 en laissant un espace annulaire apte à recevoir une partie de montage 23 d'un support de dent 22 pour sa mise en place sur ledit insert 14.

Suivant la variante de réalisation représentée sur la figure 3, le moyen de liaison 20 est un élément sous forme de manchon qui vient de formation avec le corps 10 de l'implant, formant une seule pièce, de sorte que ledit manchon prolonge supérieurement selon l'axe X-X' ledit corps 10 en assurant la continuité de la surface périphérique externe 10a cylindrique de révolution dudit corps 10 et de l'alésage axial 11. Dans ce cas, il est prévu une bague de blocage 21 qui présente un diamètre externe sensiblement égal au diamètre interne de l'alésage axial 11 du corps 10 et un diamètre interne sensiblement supérieur aux dimensions externes de l'insert 14 de sorte qu'elle est emmanchée ou vissée à force dans ledit alésage 11 entre la paroi externe périphérique 17 de l'insert 14, au-dessus des nervures 18, et la paroi 11a de l'alésage axial 11. Cette bague de blocage 21 présente une fonction identique à celle du manchon inférieur 21b de la bague de liaison 20 selon le premier mode de réalisation (voir figure 2), c'est-à-dire limiter la translation selon l'axe X-X' de l'insert 14 dans l'alésage axial 11, vers l'extrémité ouverte de ce dernier, par coopération de butée avec les nervures 18 dudit insert 14.

Selon le mode de réalisation de la figure 3, le manchon 20 formant une seule pièce avec le corps 10 entoure la partie supérieure 14a de l'insert de montage 14 en laissant un espace annulaire apte à recevoir une partie de montage 23 d'un support de dent 22 pour sa mise en place sur l'insert.

En particulier, le support de dent 22 est la bague parodontale, réalisée pour des questions de résistance des matériaux de préférence en alliage à base de titane, qui comporte une partie 24 en saillie vers l'extérieur de la gencive, réalisée de manière classique et destinée à recevoir une dent prothétique. Cette bague parodontale 22 comporte une partie de montage 23 en forme d'un manchon cylindrique qui est introduite dans l'espace annulaire ménagé entre la bague de liaison 20 et l'insert 14 pour se monter sur la partie supérieure 14a de l'insert 14. La face interne de cette partie de montage 23 de la bague parodontale 22, qui s'applique contre la paroi externe périphérique polygonale 14a de l'insert 14, présente une forme polygonale complémentaire de sorte que la bague parodontale est bloquée en rotation sur l'insert. Toutefois, lors du montage de la bague parodontale sur l'insert, on peut effectuer un ajustement de sa positon angulaire par rapport à l'insert en la pivotant autour de l'axe X-X' d'un angle correspondant à un pan de la paroi polygonale.

On distingue sur la figure 2, que la paroi interne du manchon supérieur 21a de la bague de liaison 20 comporte un décrochement 21c en saillie de ladite paroi interne. Ce décrochement 21c permet de limiter la translation suivant l'axe X-X' de l'insert 14 et de la bague parodontale 22 assemblés, vers le fond 13 de l'alésage axial 11, par coopération de butée avec la partie de montage 23 de la bague parodontale 22.

On distingue sur la figure 3, que la surface d'extrémité supérieure 21' de la bague de blocage 21 permet de limiter la translation suivant l'axe X-X' de l'insert 14 et de la bague parodontale 22 assemblés, vers le fond 13 de l'alésage axial 11, par coopération de butée avec la partie de montage 23 de la bague parodontale 22.

La bague parodontale 22 comporte un passage axial 25 qui permet l'introduction d'un organe d'assemblage ici non représenté qui traverse la bague parodontale 22 et vient se bloquer dans l'orifice 16 de l'insert 14.

Dans les modes de réalisation représentés, l'organe d'assemblage est une vis qui est vissée dans le taraudage 16 de l'insert 14.

Bien entendu, selon une variante non représentée, on peut prévoir un organe d'assemblage expansible qui vient se bloquer par expansion dans l'orifice 16 de l'insert.

Ainsi, la bague parodontale 22 est assemblée avec l'insert de montage 14 qui repose sur le manchon élastique 12. Cet insert 14 est bloqué en rotation dans l'alésage axial 11 du corps 10, tout en étant libre en translation suivant l'axe X-X' intérieur du corps 10, dans la limite imposée par la bague de liaison 20. Lorsque cet implant dentaire, impacté ou bien vissé dans l'os maxillaire et portant une dent prothétique sur la bague parodontale, est soumis à des efforts dus à la mastication, l'ensemble formé par la bague parodontale et l'insert transmet ces efforts essentiellement verticaux au manchon élastique 12 formant coussin amortisseur.

On peut envisager dans une variante non représentée que la paroi externe périphérique de l'insert représente une forme polygonale qui coopère avec la paroi de l'alésage axial du corps, également polygonale, de façon à obtenir un blocage en rotation de l'insert à l'intérieur de l'alésage du corps. En outre, on peut envisager comme autre solution anti-rotatoire de l'insert dans le corps, une section oblongue de l'alésage axial du corps qui coopère avec une forme oblongue de la paroi externe périphérique de l'insert.

Enfin, on peut envisager dans une variante non représentée que la paroi interne de la bague de liaison comporte un autre décrochement qui coopère en butée avec un élément en saillie de la surface périphérique externe de l'insert pour [imiter sa translation sur l'axe X-X' vers l'ouverture de l'alésage axial du corps.

## Revendications

1. Implant dentaire comportant :
- un corps (10) allongé selon un axe X-X', muni d'un alésage axial (11) ouvert à une extrémité,
- un élément élastiquement déformable (12) positionné dans le fond (13) de l'alésage axial (11) du corps (10),
- un insert de montage (14) allongé selon l'axe X-X', monté dans l'alésage axial (11) du corps (10) en appui contre l'élément élastiquement déformable (12), et
- un moyen de liaison (20) apte a être rendu solidaire du corps (10) et entourant la partie supérieure (14a) de l'insert de montage (14) tout en laissant un espace annulaire apte à recevoir un support de dent (22) comportant un passage traversant (25),
caractérisé en ce que :
- ledit insert de montage (14) est percé d'un orifice (16) ouvert à une extrémité et comporte une paroi externe périphérique (17) pourvu de moyens de blocage en rotation (18) coopérant avec des moyens complémentaires (19) de la paroi (11a) de l'alésage axial (11) du corps (10) afin de bloquer en rotation ledit insert de montage (14) dans ce dernier, tout en autorisant une translation limitée selon l'axe X-X' dudit insert (14) dans ledit alésage axial (11),
- le support de dent (22) est monté sur ledit insert de montage (14), et le passage traversant (25) dudit support de dent (22) est aligné avec l'orifice (16) dudit insert de montage (14) pour assurer le montage d'un organe d'assemblage dans l'orifice (16) dudit insert (14) via le passage traversant (25) du support de dent (22).

2. Implant dentaire selon la revendication 1, caractérisé en ce que l'orifice (16) de l'insert de montage (14) est un taraudage, et l'organe d'assemblage du support de dent (22) et de l'insert de montage (14) est une vis qui est vissée dans ledit taraudage via le passage traversant (25) du support de dent (22).

3. Implant dentaire selon l'une des revendications 1 ou 2, caractérisé en ce que les moyens de blocage en rotation dudit insert de montage (14) comprennent des nervures (18) s'étendant verticalement sur au moins une partie de la hauteur de la paroi externe périphérique (17) dudit insert (14) et réparties sur une circonférence de ce dernier, ces nervures (18) coopérant avec des rainures (19) de forme complémentaire formées dans la paroi (11a) de l'alésage axial (11), du corps (10) sur une partie de sa hauteur.

4. Implant dentaire selon la revendication 3, caractérisé en ce que l'insert de montage (14) se prolonge au-dessus de la paroi externe périphérique (17) munie des nervures (18) par une partie présentant une paroi externe périphérique (14a) de forme polygonale qui coopère avec une surface interne complémentaire du support de dent (22) de façon à assurer le blocage en rotation du support de dent (22) monté sur l'insert de montage (14) tout en autorisant au montage dudit support de dent (22) un ajustement angulaire autour de l'axe X-X' de celui-ci sur ledit insert (14).

5. Implant dentaire selon lune des revendications 1 ou 2, caractérisé en ce que la paroi externe périphérique (17) de l'insert de montage (14) présente une forme polygonale qui coopére avec la paroi (11a) de forme complémentaire de l'alésage axial (11) pour assurer le blocage en rotation dudit insert (14) dans le corps (10).

6. Implant dentaire selon l'une des revendications 1 ou 2, caractérisé en ce que la paroi externe périphérique (17) de l'insert de montage (14) présente une forme oblongue qui coopère avec la paroi (11a) de forme complémentaire de l'alésage axial (11) pour assurer le blocage en rotation dudit insert (14) dans le corps (10).

7. Implant dentaire selon l'une quelconque des revendications 1 à 6, caractérisé en ce que le moyen de liaison (20) est une bague de liaison qui comporte une partie apicale de montage (21b) emmanchée en force dans l'alésage axial (11) du corps (10).

8. Implant dentaire selon l'une quelconque des revendications 1 à 6, caractérisé en ce que le moyen de liaison (20) est une bague de liaison qui comporte une partie apicale de montage (21b) vissée en force dans un filetage de la paroi (11a) de l'alésage (11) du corps (10).

9. Implant dentaire selon l'une des revendications 7 ou 8, caractérisé en ce que ladite bague de liaison (20) comporte sur sa paroi interne des moyens coopérant en butée avec des parties de l'insert (14) et/ou du support de dent (22) pour limiter leur translation suivant l'axe X-X'.

10. Implant dentaire selon l'une quelconque des revendications 1 à 6, caractérisé en ce que le moyen de liaison (20) est un élément venant de formation avec le corps (10) de l'implant pour former une seule pièce.

11. Implant dentaire selon la revendication 10, caractérisé en ce qu'il est prévu une bague de blocage (21) positionée en force dans l'alésage axial (11) du corps (10) de l'implant, apte à limiter une translation axiale de l'insert (14) et du support de dent (20) a l'intérieur dudit alésage axial (11).

12. Implant dentaire selon l'une quelconque des revendications 1 à 11, caractérisé en ce que l'élément élastiquement déformable (12) présente une forme de manchon et est réalisé en un matériau polymérique notamment à base de polyéthylène.

13. Implant dentaire selon l'une quelconque des revendications 1 à 12, caractérisé en ce que le corps (10) et le moyen de liaison (20) sont réalisés en titane pur ou en un alliage à base de titane, et l'insert de montage (14) et le support de dent (22) sont réalisés avec un alliage à base de titane.

14. Implant dentaire selon l'une des revendications 1 à 13, caractérisé en ce que le support de dent (20) est la bague parodontale.

## Claims

1. Dental implant including:
- a body (10) which extends lengthwise along an axis X-X' and is equipped with an axial bore (11) open at one end,
- an elastically deformable element (12) which is positioned in the bottom (13) of the axial bore (11) of the body (10),
- an assembly insert (14) which extends lengthwise along the axis X-X' and is fitted in the axial bore (11) of the body (10) so as to bear against the elastically deformable element (12), and
- a connection means (20) which can be made integral with the body (10) and surrounds the upper part (14a) of the assembly insert (14) while leaving an annular space able to receive a tooth support (22) which includes a through-passage (25),
characterized in that:
- the said assembly insert (14) is pierced with an orifice (16) open at one end and includes a peripheral external wall (17) provided with rotational blocking means (18) which cooperate with complementary means (19) of the wall (11a) of the axial bore (11) of the body (10) so as to block the said assembly insert (14) in rotation in the latter, while permitting a limited translation of the said insert (14) in the said axial bore (11) along the axis X-X',
- the tooth support (22) is fitted on the said assembly insert (14), and the through-passage (25) of the said tooth support (22) is aligned with the orifice (16) of the said assembly insert (14) in order to allow the fitting of a joining member in the orifice (16) of the said insert (14) via the through-passage (25) of the tooth support (22).

2. Dental implant according to Claim 1, characterized in that the orifice (16) of the assembly insert (14) is a tapped hole, and the member for joining the tooth support (22) and the assembly insert (14) is a screw which is screwed into the said tapped hole via the through-passage (25) of the tooth support (22).

3. Dental implant according to either of Claims 1 and 2, characterized in that the means for rotational blocking of the said assembly insert (14) comprise ribs (18) running vertically over at least part of the height of the peripheral external wall (17) of the said insert (14) and distributed about a circumference of the latter, these ribs (18) cooperating with ribs (19) of complementary shape formed in the wall (11a) of the axial bore (11) of the body (10) over part of its height.

4. Dental implant according to Claim 3, characterized in that the assembly insert (14) continues above the peripheral external wall (17), equipped with the ribs (18), via a part which has a peripheral external wall (14a) of polygonal shape which cooperates with a complementary internal surface of the tooth support (22) in such a way as to allow the rotational blocking of the tooth support (22) fitted on the assembly insert (14), while permitting an angular adjustment of the tooth support (22) about the axis X-X' when it is fitted on the said insert (14).

5. Dental implant according to either of Claims 1 and 2, characterized in that the peripheral external wall (17) of the assembly insert (14) has a polygonal shape which cooperates with the wall (11a) of complementary shape in the axial bore (11) in order to allow the rotational blocking of the said insert (14) in the body (10).

6. Dental implant according to either of Claims 1 and 2, characterized in that the peripheral external wall (17) of the assembly insert (14) has an oblong shape which cooperates with the wall (11a) of complementary shape in the axial bore (11) in order to allow the rotational blocking of the said insert (14) in the body (10).

7. Dental implant according to any one of Claims 1 to 6, characterized in that the connection means (20) is a connection ring which includes an apical assembly part (21b) engaged by force into the axial bore (11) of the body (10).

8. Dental implant according to any one of Claims 1 to 6, characterized in that the connection means (20) is a connection ring which includes an apical assembly part (21b) which is screwed by force into a thread in the wall (11a) of the bore (11) of the body (10).

9. Dental implant according to either of Claims 7 and 8, characterized in that the said connection ring (20) includes, on its internal wall, means cooperating in abutment with parts of the insert (14) and/or of the tooth support (22) in order to limit their translation along the axis X-X'.

10. Dental implant according to any one of Claims 1 to 6, characterized in that the connection means (20) is an element which is formed integrally with the body (10) of the implant so as to make a single piece.

11. Dental implant according to Claim 10, characterized in that it is provided with a blocking ring (21) positioned by force in the axial bore (11) of the body (10) of the implant, able to limit an axial translation of the insert (14) and of the tooth support (22) inside the said axial bore (11).

12. Dental implant according to any one of Claims 1 to 11, characterized in that the elastically deformable element (12) has a sleeve tube shape and is made of a polymer material, particularly based on polyethylene.

13. Dental implant according to any one of Claims 1 to 12, characterized in that the body (10) and the connection means (20) are made of pure titanium or a titanium-based alloy, and the assembly insert (14) and the tooth support (22) are made using a titanium-based alloy.

14. Dental implant according to one of Claims 1 to 13, characterized in that the tooth support (22) is the periodontal ring.

## Patentansprüche

1. Zahnimplantat, das folgendes aufweist:
- einen länglichen Körper (10) mit einer Achse X-X', versehen mit einer an einem Ende offenen axialen Bohrung (11),
- ein elastisch verformbares Element (12), welches am Grund (13) der axialen Bohrung (11) des Körpers (10) angeordnet ist,
- einen entlang der Achse X-X' verlaufenden Montageeinsatz (14), welcher in der axialen Bohrung (11) des Körpers (10) so montiert ist, daß er an dem elastisch verformbaren Element (12) anliegt, und
- ein Verbindungsmittel (20), welches mit dem Körper (10) fest verbunden werden kann und den oberen Teil (14a) des Montageeinsatzes (14) umrundet und dabei einen ringförmigen Raum freiläßt, in den ein mit einem Durchgang (25) versehener Zahnhalter (22) eingesetzt werden kann,
**dadurch gekennzeichnet, daß**
- der Montageeinsatz (14) mit einer an einem Ende offenen Mündung (16) gebohrt ist und eine äußere periphere Wand (17) aufweist, die mit Sicherungsmittein (18) gegen Verdrehung ausgerüstet ist, welche mit komplementären Mitteln (19) der Wand (11a) der axialen Bohrung (11) des Körpers (10) zusammenwirken, um den Montageeinsatz (14) drehfest in dem Körper zu sichern und gleichzeitig eine begrenzte Verschiebung entlang der Achse X-X' des Montageeinsatzes (14) in der axialen Bohrung (11) zuzulassen,
- der Zahnhalter (22) auf dem Montageeinsatz (14) montiert ist und der Durchgang (25) des Zahnhalters (22) mit der Mündung (16) des Montageeinsatzes (14) ausgerichtet wird, um über den Durchgang (25) des Zahnhalters (22) die Montage eines Verbindungselementes in der Mündung (16) des Montageeinsatzes (14) zu ermöglichen.

2. Zahnimplantat nach Anspruch 1,
**dadurch gekennzeichnet, daß**
die Mündung (16) des Montageeinsatzes (14) ein Innengewinde ist, und daß das Verbindungselement des Zahnhalters (22) und des Montageeinsatzes (14) eine Schraube ist, welche über den Durchgang (25) des Zahnhalters (22) in das Innengewinde eingeschraubt wird.

3. Zahnimplantat nach einem der Ansprüche 1 oder 2,
**dadurch gekennzeichnet, daß**
die Sicherungsmittel gegen eine Verdrehung des Montageeinsatzes (14) Rippen (18) aufweisen, welche sich vertikal über mindestens einen Teil der Höhe der äußeren peripheren Wand (17) des Montageeinsatzes (14) erstrecken und über dessen Umfang verteilt sind, wobei diese Rippen (18) mit komplementären Nuten (19) zusasmmenwirken, welche in der Wand (11a) der axialen Bohrung (11) des Körpers (10) auf einem Teil seiner Höhe eingebracht sind.

4. Zahnimplantat nach Anspruch 3,
**dadurch gekennzeichnet, daß**
der Montageeinsatz (14) über die mit den Rippen (18) versehene äußere periphere Wand (17) mit einem Abschnitt übersteht, welcher eine äußere periphere Wand (14a) polygonaler Form aufweist, die mit einer komplementären Innenfläche des Zahnhalters (22) so zusammenwirkt, daß die Sicherung gegen Verdrehung des auf dem Montageeinsatz (14) montierten Zahnhalters (22) gewährleistet ist, und gleichzeitig eine Winkeljustierung des Zahnhalters (22) uni die Achse X-X' auf dem Montageeinsatz (14) ermöglicht wird.

5. Zahnimplantat nach einem der Ansprüche 1 oder 2,
**dadurch gekennzeichnet, daß**
die äußere periphere Wand (17) des Montageeinsatzes (14) eine polygonale Form hat, welche mit der komplementären Wand (11a) der axialen Bohrung (11) zusammenwirkt, um den Montageeinsatz (14) in dem Körper (10) drehfest zu sichern.

6. Zahnimplantat nach einem der Ansprüche 1 oder 2,
**dadurch gekennzeichnet, daß**
die äußere periphere Wand (17) des Montageeinsatzes (14) eine längliche Form hat, welche mit der komplementären Wand (11a) der axialen Bohrung (11) zusammenwirkt, um den Montageeinsatz (14) in dem Körper (10) drehfest zu sichern.

7. Zahnimplantat nach einem der Ansprüche 1 bis 6,
**dadurch gekennzeichnet, daß**
das Verbindungsmittel (20) ein Verbindungsring ist, welcher einen apikalen Montageteil (21b) aufweist, der mit Kraft in die axiale Bohrung (11) des Körpers (10) eingepreßt wird.

8. Zahnimplantat nach einem der Ansprüche 1 bis 6,
**dadurch gekennzeichnet, daß**
das Verbindungsmittel (20) ein Verbindungsring ist, welcher einen apikalen Montageteil (21b) aufweist, der mit Kraft auf ein Gewinde der Wand (11a) der Bohrung (11) des Körpers (10) aufgeschraubt wird.

9. Zahnimplantat nach einem der Ansprüche 7 oder 8,
**dadurch gekennzeichnet, daß**
der Verbindungsring (20) an seiner Innenwand Anlagemittel aufweist, welche mit Teilen des Montageeinsatzes (14) und/oder des Zahnhalters (22) zusammenwirken, um ihre Verschiebung entlang der Achse X-X' zu begrenzen.

10. Zahnimplantat nach einem der Ansprüche 1 bis 6,
**dadurch gekennzeichnet, daß**
das Verbindungsmittel (20) ein an dem Körper (10) des Implantats ausgebildetes Element ist, um dadurch ein einziges Teil herzustellen.

11. Zahnimplantat nach Anspruch 10,
**dadurch gekennzeichnet, daß**
ein Sicherungsring (21) vorgesehen ist, welcher mit Kraft in die axiale Bohrung (11) des Körpers (10) des Implantats eingesetzt wird, um die axiale Verschiebung des Montageeinsatzes (14) und des Zahnhalters (20) in der axialen Bohrung (11) zu begrenzen.

12. Zahnimplantat nach einem der Ansprüche 1 bis 11,
**dadurch gekennzeichnet, daß**
das elastisch verformbare Element (12) die Form einer Muffe hat und aus einem polymeren Material insbesondere auf der Basis von Polyethylen hergestellt ist.

13. Zahnimplantat nach einem der Ansprüche 1 bis 12,
**dadurch gekennzeichnet, daß**
der Körper (10) und das Verbindungsmittel (20) aus reinem Titan oder einer Titanlegierung hergestellt sind, und daß der Montageeinsatz (14) und der Zahnhalter (22) aus einer Titanlegierung hergestellt werden.

14. Zahnimplantat nach einem der Ansprüche 1 bis 13,
**dadurch gekennzeichnet, daß**
der Zahnhalter (20) der parodontole Ring ist.
